# EUROPÄISCHE PATENTSCHRIFT

(11) **EP 1 386 077 B1**
(45) Veröffentlichungstag und Bekanntmachung des Hinweises auf die Patenterteilung: **22.06.2011**
(21) Anmeldenummer: 02730152.2
(22) Anmeldetag: 12.04.2002
(51) Int. Cl.: F03D 7/00, F03D 9/02, F03D 9/00, G05D 22/02, B60H 1/32

(54) **VERFAHREN ZUR STEUERUNG EINER WINDENERGIEANLAGE**
METHOD FOR CONTROLLING A WIND ENERGY PLANT
PROCEDE POUR COMMANDER UNE INSTALLATION D'ENERGIE EOLIENNE

(30) Priorität: 20.04.2001 DE 10119625
(43) Veröffentlichungstag der Anmeldung: 04.02.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/004110
(87) Internationale Veröffentlichungsnummer: WO 2002/086313

(56) Entgegenhaltungen:
- DE-A- 3 342 583
- FR-A- 2 728 514
- US-A- 4 262 210
- US-A- 4 387 290
- US-A- 5 806 763

## Beschreibung

Die vorliegende Erfindung betrifft ein Verfahren zur Steuerung einer Windenergieanlage und eine Windenergieanlage, insbesondere zur Ausführung des Verfahrens.

Windenergieanlagen sind seit langer Zeit allgemein bekannt und werden als umweltfreundliche Energieerzeuger in jüngster Zeit vermehrt verwendet.

Dabei liegt es in der Natur der Sache, dass diese Anlagen den Witterungseinflüssen ausgesetzt sind. Eines der Probleme, das bei Windenergieanlagen eine große Bedeutung hat, ist Feuchtigkeit, da Windenergieanlagen mit ihren elektrischen Systemen davor weitgehend geschützt werden müssen.

Solche Anlagen können jedoch nicht hermetisch abgeschlossen werden , um ein Eindringen von Feuchtigkeit sicher zu vermeiden, so dass Feuchtigkeit von bestimmten Anlagenteilen durch eine weitere Kapselung wie einen Schrank ferngehalten werden muss. Insbesondere im Bereich der Gondel mit großen metallischen Massen, wie dem Generator ist jedoch eine solche Kapselung nicht möglich.

Andererseits führen aber gerade große Massen zu einem beträchtlichen Problem, wenn diese zum Beispiel über Nacht abgekühlt sind und nun die Temperatur in der Umgebung der Anlage ansteigt.

Da warme Luft mehr Feuchtigkeit speichern kann, als kalte Luft, dringt also diese mit Feuchtigkeit angereicherte warme Luft auch in die Gondel ein und trifft dort auf den bei Stillstand der Anlage noch kalten Generator. Die Feuchtigkeit schlägt sich dann auf dem Generator nieder und kondensiert zu Wasser, das dann in großer Menge auftreten kann. DE 2635687 offenbart ein Verfahren zum Schutz eines Generators vor Feuchtigkeit.

Ein besonderes Problem ist dies bei Windenergieanlagen mit einem Ringgenerator, wo das Wasser in den Generator gelangt und dann beim Anfahren des Generators, wenn er mit Erreger-Energie beaufschlagt wird, zu beträchtlichen Schäden führen kann.

Aufgabe der vorliegenden Erfindung ist es daher, diese von dem Wasser ausgehende Gefahr zu beseitigen.

Diese Aufgabe wird mit einem Verfahren nach Anspruch 1 gelöst.

Außerdem wird die Aufgabe gelöst durch eine Windenergieanlage nach Anspruch 4.

Nachfolgend wird die Erfindung anhand der Figuren näher beschrieben. Dabei zeigen:
- Fig. 1: vereinfacht einen Stator und einen Läufer eines Generators;
- Fig. 2: ebenfalls einen Stator und einen Läufer eines Generators in einer alternativen Ausführungsform.

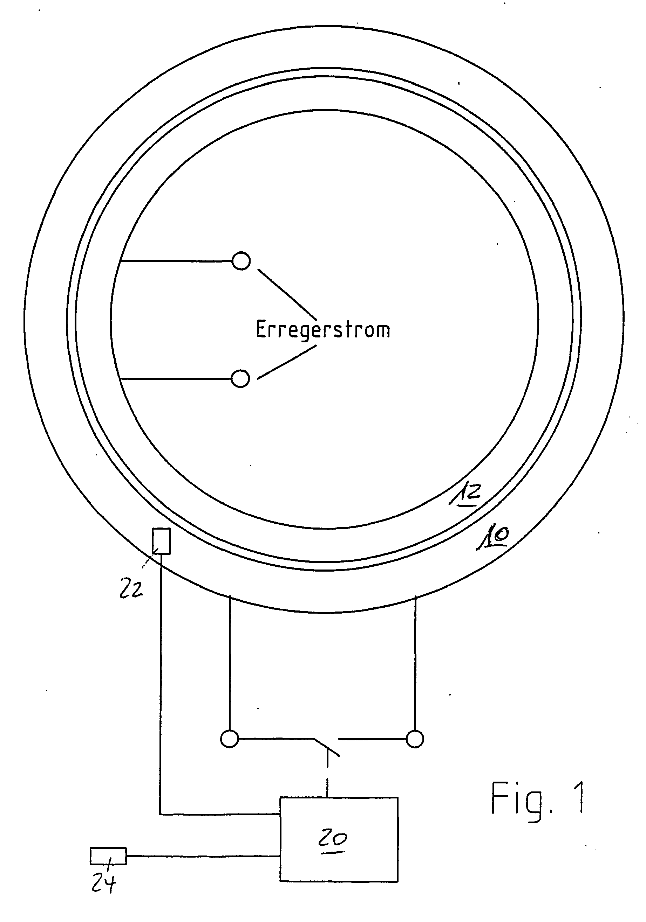

In Fig. 1 ist stark vereinfacht ein Generator mit einem Stator 10 und einem Läufer 12 dargestellt. Der Stator 10 weist Anschlussklemmen auf, an welchem im Normalbetrieb die elektrische Energie abgegriffen werden kann. Der Läufer 12 weist ebenfalls Anschlussklemmen auf, über welche der Erregerstrom zugeführt wird.

Zwischen den Anschlussklemmen des Stators 10 ist ein Kontakt dargestellt, der von der Steuerungseinrichtung 20 betätigt wird und die Stator-Anschlüsse kurzschließt.

Die Steuerungseinrichtung 20 erfasst über 2 Temperatursensoren 22, 24 die Temperatur des Generators (in diesem Fall des Stators) sowie die Temperatur in der Umgebung der Windenergieanlage.

Ist die mit dem Sensor 22 erfasste Temperatur des Stators geringer, als die mit dem Sensor 24 erfasste Temperatur der Umgebung, wird der Kontakt zwischen den Anschlussklemmen des Stators geschlossen und damit ein Kurzschluss herbeigeführt.

Sodann wird ein vorgebbarer Erregerstrom in den Läufer 12 über dessen Anschlussklemmen eingespeist. Durch die Höhe des in den Läufer 12 eingespeisten Erregerstromes kann die in dem Stator des Generators induzierte Leistung beeinflusst werden.

Wird der Stator kurzgeschlossen, ist die Stator-Spannung sehr klein und dabei fließt ein sehr hoher Strom (Kurzschlussstrom), der eine entsprechende Stromwärme im Stator entstehen lässt. Durch diese Stromwärme wird der Generator insgesamt aufgeheizt, so dass die Feuchtigkeit verdunstet. Selbst die Bildung von Kondenswasser wird mithin bei der Erfindung im optimierten Generatorgehäuse mittels messtechnischer Überwachung registriert und in diesem Fall startet die Windenergieanlage (beim Anfahren) automatisch im weitestgehend spannungslosen Erwärmungslauf, der die Restfeuchte im Generator verdampfen lässt. Um den Feuchtigkeitseintritt in die Gondel der Windenergieanlage so gering wie möglich zu gestalten, ist das gesamte Gondelgehäuse wasserdicht gestaltet, so dass durch die Außenverkleidung (der Gondel) das Eintreten von leitendem Material wie Feuchtigkeit verhindert wird.

In einer bevorzugten Weiterbildung der Erfindung wird die Aufheizung des Generators so lange fortgesetzt, bis die Temperatur des Generators die Temperatur der Umgebungsluft um ein vorgegebenes Maß überschreitet, bevor die Windenergieanlage in den Normalbetrieb übergeht, d.h., bevor der Kurzschluss des Stators aufgehoben und eine normale Erregerleistung eingespeist wird.

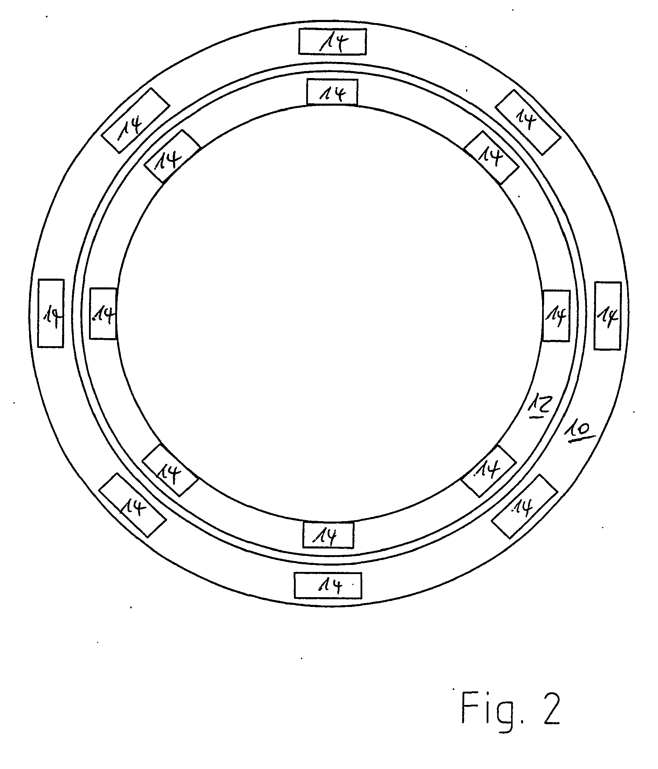

Fig. 2 zeigt eine alternative Ausführungsform des Generators mit Stator 10 und Läufer 12.

In dieser Ausführungsform sind an Stator 10 und Läufer 12 gleichförmig auf dem Umfang verteilte Heizwiderstände 14 angeordnet. Stellt nun die (nicht dargestellte) Steuerung 20 die Temperaturdifferenz zwischen dem Stator 10 des Generators und der Umgebungsluft fest, werden die Heizwiderstände 14 eingeschaltet und so der Generator aufgeheizt. Die Feuchtigkeit in dem Generator verdunstet und nach einer vorgegebenen Zeit oder bei Erreichen einer vorgegebenen Temperaturdifferenz zwischen der Temperatur von Stator 10 und Läufer 12 und der Umgebung kann der Normalbetrieb aufgenommen werden.

Eine eigene Heizung kann nicht nur für den Generator, sondern auch für andere elektrisch empfindliche Teile der Windenergieanlage in ihrem Innern vorgesehen sein. Eine solche Heizung wird regelmäßig wie die Generatorheizung gesteuert, d. h., dass eine Erwärmung dann erfolgt, wenn das zu wärmende Teil eine Temperatur aufweist, die geringer ist als die Außenumgebungstemperatur, so dass der Niederschlag von Feuchtigkeit an dem elektrischen Teil verhindert wird.

## Patentansprüche

1. Verfahren zur Steuerung einer Windenergieanlage, **gekennzeichnet durch** die Schritte:
- Erfassen der Temperatur des Generators und der Temperatur der Luft in der Umgebung der Windenergieanlage,
- Ermitteln der Temperaturdifferenz,
- Aufheizen des Generators, wenn die Temperatur des Generators unterhalb der Temperatur der Umgebungsluft liegt,
- Kurzschließen des Generator-Stators und
- Beaufschlagen des Generator-Läufers mit einem vorgebbaren Erregerstrom.

2. Verfahren nach Anspruch 1,
**dadurch gekennzeichnet, dass** die Heizung des Generators für eine vorgegebene Zeit oder so lange erfolgt, bis die Temperatur des Generators die Umgebungstemperatur um ein vorgegebenes Maß überschreitet.

3. Verfahren nach einem der vorhergehenden Ansprüche,
**dadurch gekennzeichnet, dass** eine Aufheizung des Generators erfolgt, wenn die Temperatur des Generators um einen vorbestimmten Wert unterhalb der Temperatur der Umgebungsluft oder der Temperatur in der Generatorgondel liegt.

4. Windenergieanlage, mit
einem elektrischen Generator zum Erzeugen elektrischer Energie, wobei der Generator einen Stator (10) und einen Läufer (12) aufweist, wobei der Stator (10) erste Anschlussklemmen und der Läufer (12) zweite Anschlussklemmen zum Zuführen eines Regelstroms aufweist,
einem schließbaren Kontakt zwischen den Anschlussklemmen des Stators (10),
einer Steuerungseinrichtung (20), welche mit einem ersten Temperatursensor (22) zur Erfassung der Temperatur des Generators und einem zweiten Temperatursensor (24) zum Erfassen der Temperatur in der Umgebung der Windenergieanlage vorgesehen ist,
wobei die Steuerungseinrichtung (20) den Kontakt zwischen den Anschlussklemmen des Stators schließt, wenn die durch den ersten Temperatursensor (22) erfasste Temperatur des Generators geringer als die durch den zweiten Sensor (24) erfasste Temperatur der Umgebung ist, wodurch ein Kurzschluss im Stator herbeigeführt wird,
wobei ein vorgebbarer Erregerstrom durch die zweiten Anschlussklemmen dem Läufer (12) zugeführt wird.

## Claims

1. A method for controlling a wind power installation, **characterised by** the steps:
- detecting the temperature of the generator and the temperature of the air in the surroundings of the wind power installation,
- ascertaining the temperature difference,
- heating the generator if the temperature of the generator is below the temperature of the ambient air,
- short-circuiting the generator stator, and
- applying a predeterminable exciter current to the generator rotor.

2. A method according to claim 1,
**characterised in that** the heating of the generator is effected for a predetermined time or until the temperature of the generator exceeds the ambient temperature by a predetermined amount.

3. A method according to either of the preceding claims,
**characterised in that** heating of the generator is effected if the temperature of the generator is below the temperature of the ambient air or the temperature in the generator nacelle by a predetermined value.

4. A wind power installation, having
an electrical generator for generating electrical energy, wherein the generator has a stator (10) and a rotor (12), wherein the stator (10) has first connection terminals and the rotor (12) has second connection terminals for supplying a control current,
a closable contact between the connection terminals of the stator (10),
a control device (20) which is provided with a first temperature sensor (22) for detecting the temperature of the generator and with a second temperature sensor (24) for detecting the temperature in the surroundings of the wind power installation,
wherein the control device (20) closes the contact between the connection terminals of the stator if the temperature of the generator detected by the first temperature sensor (22) is lower than the temperature of the surroundings detected by the second sensor (24), thereby causing a short-circuit in the stator,
wherein a predeterminable exciter current is supplied to the rotor (12) through the second connection terminals.

## Revendications

1. Procédé pour commander une installation d'énergie éolienne, **caractérisé par** les étapes consistant à :
- détecter la température du générateur et la température de l'air aux alentours de l'installation d'énergie éolienne,
- déterminer la différence de température,
- chauffer le générateur lorsque la température du générateur est inférieure à la température de l'air ambiant,
- court-circuiter le stator du générateur et
- alimenter le rotor du générateur avec un courant d'excitation pouvant être prédéfini.

2. Procédé selon la revendication 1,
**caractérisé en ce que** le chauffage du générateur a lieu pendant une durée prédéfinie ou jusqu'à ce que la température du générateur dépasse la température ambiante d'une valeur prédéfinie.

3. Procédé selon l'une quelconque des revendications précédentes,
**caractérisé en ce qu'**un chauffage du générateur a lieu lorsque la température du générateur est inférieure d'une valeur prédéterminée à la température de l'air ambiant ou à la température dans la nacelle à générateur.

4. Installation d'énergie éolienne, comprenant
un générateur électrique permettant de générer de l'énergie électrique, le générateur présentant un stator (10) et un rotor (12), le stator (10) présentant des premières bornes de connexion et le rotor (12) des deuxièmes bornes de connexion pour amener un courant de commande,
un contact pouvant être fermé entre les bornes de connexion du stator (10),
un dispositif de commande (20) qui est prévu avec un premier capteur de température (22) pour détecter la température du générateur et un deuxième capteur de température (24) pour détecter la température aux alentours de l'installation d'énergie éolienne,
dans laquelle le dispositif de commande (20) ferme le contact entre les bornes de connexion du stator, lorsque la température du générateur détectée par le premier capteur de température (22) est inférieure à la température ambiante détectée par le deuxième capteur (24), ce qui provoque un court-circuit dans le stator,
dans laquelle un courant d'excitation pouvant être prédéfini est amené au rotor (12) par les deuxièmes bornes de connexion.
